# EUROPEAN PATENT SPECIFICATION

(11) **EP 1 614 564 B1**
(45) Date of publication and mention of the grant of the patent: **14.05.2008**
(21) Application number: 05254152.1
(22) Date of filing: 01.07.2005
(51) Int. Cl.: B60H 1/00

(54) **Centrifugal blower**
Zentrifugalgebläse
Ventilateur centrifuge

(30) Priority: 09.07.2004 JP 2004202958; 23.05.2005 JP 2005149235
(43) Date of publication of application: 11.01.2006
(73) Proprietor: Sanden Corporation, Isesaki-shi, Gunma 372-8502 (JP)
(72) Inventor: Ikeda, Susumu c/o Sanden Corporation, Isesaki-shi, Gunma 372-8502 (JP); Nabeta, Yukio c/o Sanden Corporation, Isesaki-shi, Gunma 372-8502 (JP); Sugawara, Yoshinobu c/o Sanden Corporation, Isesaki-shi, Gunma 372-8502 (JP); Kitazume, Michio c/o Sanden Corporation, Isesaki-shi, Gunma 372-8502 (JP); Ohtsuki, Yutaka c/o Sanden Corporation, Isesaki-shi, Gunma 372-8502 (JP)
(74) Representative: Haley, Stephen

(56) References cited:
- PATENT ABSTRACTS OF JAPAN vol. 2003, no. 12, 5 December 2003 (2003-12-05) -& JP 2006 007946 A (ZEXEL VALEO CLIMATE CONTROL CORP), 12 January 2006 (2006-01-12)
- PATENT ABSTRACTS OF JAPAN vol. 008, no. 050 (M-281), 7 March 1984 (1984-03-07) -& JP 58 204997 A (NISSAN JIDOSHA KK), 29 November 1983 (1983-11-29)
- PATENT ABSTRACTS OF JAPAN vol. 2002, no. 05, 3 May 2002 (2002-05-03) -& JP 2002 019445 A (SANDEN CORP), 23 January 2002 (2002-01-23)

## Description

The present invention relates to a centrifugal blower, and, more specifically, to a double-axis type centrifugal multiblade blower suitable particularly for use in an air conditioning system for vehicles.

As a conventional blower used in an air conditioning system for vehicles, in particular, as a blower for a thin air conditioning unit mounted in a cabin of a work vehicle at a position of a space between an operator seat and a floor and the like, known is a double-axis type blower which has multiblade fans connected to respective rotary shafts of a double-axis type motor and casings the interior of each of which is formed as a scroll structure. In such a double-axis type blower, air intake is carried out in both the fans, and a design device so as not to damage the air intake when the blower is mounted, for example, a design device to provide a bellmouth having a diameter increasing toward an outside of each casing to an air intake port of each casing, is carried out, as disclosed in, for example, JP-A-2004-169579.

In a recent work vehicle, for the purpose of increasing the comfortability in a cabin, a space for mounting an air conditioning unit is restricted smaller, and it has been difficult to ensure a sufficiently large space for air intake of a blower. Depending upon a mounting condition, there may be a case where a double-axis type blower can suck air only from a fan of one side. However, in such a case where air intake is carried out only at one side fan of the double-axis type blower, the ability for sending air may be reduced and at the same time more air is supplied to the fan of the air-intake side, and therefore, the air sending balance between both fans may be broken remarkably. The unbalanced air sending may disturb a temperature distribution of a heat exchanger, and as a result, the ability of the heat exchanger may not be exhibited sufficiently, thereby reducing the cooling ability of the air conditioning unit remarkably.

In order to solve such a problem, it is considered to ensure an air intake route for a fan of smaller air intake amount side. In such a structure, however, although the air sending balance may be improved to some extent, the size of the entire unit becomes large, and it becomes difficult to dispose the unit within a limited mounting space.

Further, the following problems may be considered as to motor cooling of a double-axis type centrifugal multiblade blower. Namely, in a conventional technology, the motor cooling of a double-axis type centrifugal multiblade blower is carried out by utilizing a static pressure in an air conditioning unit or a pressure difference between a static pressure in a blower casing and a static pressure in a blower motor. Therefore, accessories such as pipes or hoses for introducing cooling air into a motor are required. Further, in the air sending from an air conditioning unit, for example, a care is required for preventing water adhered to an evaporator from entering into the motor through a certain route.

Furthermore, because a space for mounting an air conditioning unit is restricted smaller for the purpose of increasing the comfortability in a cabin in a recent work vehicle, as aforementioned, depending upon the mounting condition, there is a case where air is sent from a blower disposed outside of the cabin to a main body (part for functioning as an air conditioner) of the air conditioning unit disposed in the cabin through a hole opened on a wall surface. In such a case, for cooling a double-axis type motor, it is required to send cooling air into the motor from the main body of the air conditioning unit by using a pipe provided through the exclusive hole opened on the wall surface, and therefore, an exclusive pipe and a seal (a packing) for preventing air leakage are required. Further, similarly to the above-described case, a care is required for preventing water adhered to an evaporator from entering into the motor. The life span of the blower motor depends on a temperature of a brush in the motor, and in a case where the brush temperature at the time of motor driving is high, the life span may decrease.

It would be desirable to provide a double-axis type centrifugal multiblade blower which can improve the reduction of the ability for air sending and the unbalanced air sending of a double-axis type blower in a case of one side air intake, without changing the size of the entire blower, and which can prevent reduction of the cooling ability of the air conditioning unit.

Further, it would be desirable to provide a double-axis type centrifugal multiblade blower which can effectively cool a blower motor while decreasing the number of parts and which can extend the life span by suppressing elevation of the brush temperature of the motor.

A centrifugal blower according to the present invention comprises first and second multiblade fans each connected to each rotary shaft of a double-axis type motor, first and second casings each containing each of the first and second multiblade fans, an interior of each of the first and second casings being formed as a scroll structure, and a cover for covering both of the first and second casings. The centrifugal blower is characterized in that the cover has an opening only at a position corresponding to a position of an air intake port of the first casing except at positions corresponding to positions of air discharge ports of both of the first and second casings.

Namely, by providing an opening only at a position corresponding to a position of an air intake port of the first casing, the blower is designed initially as an one-side air intake structure, and the aforementioned problems accompanying with the one-side air intake are to be solved by improving the inside structure of the centrifugal blower.

In the centrifugal blower according to the present invention, it is preferred that a portion of the scroll-structure interior of the first casing positioned at an air discharge port side of the first casing is formed as a two-layer scroll structure, and a part of discharged air separated by the two-layer scroll structure is introduced into the cover. Further, it is preferred that a guide for guiding the part of discharged air separated by the two-layer scroll structure to an air intake port of the second casing is provided in the cover.

Further, in the centrifugal blower, it is preferred that a main plate of the second multiblade fan connecting a multiblade fan portion of the second multiblade fan to the rotary shaft is disposed at a position in an outer half area in an axial direction of the second multiblade fan.

Namely, the scroll in the air-intake side fan (in the first multiblade fan) is formed as a two-layer scroll structure (a double-scroll structure) so that a part of the air discharged from the first multiblade fan of the air-intake side can be sent to the non-air-intake side fan (the second multiblade fan), and in the side of the non-air-intake side fan (the second multiblade fan), the main plate is disposed at a position of an outer side in the axial direction so that the air intake path can be enlarged in order to efficiently suck the air sent from the side of the first multiblade fan into the second multiblade fan.

Further, in the centrifugal blower, it is preferred that a bellmouth having a diameter increasing toward an outside of each casing is provided to an air intake port of each casing, in order to suck air more smoothly.

Further, in the centrifugal blower, it is preferred that a motor cooling air guide for guiding the part of discharged air separated by the two-layer scroll structure to the motor as motor cooling air is provided in the cover. The motor cooling air is guided to a cooling air intake port provided on the motor or a motor cover, and therefrom, the motor cooling air is introduced into the motor. This motor cooling air guide may be provided integrally with the above-described cover, or may be provided integrally with the motor cover separated from the above-described cover.

In such a centrifugal blower according to the present invention, outside air is sucked from the intake port of the first casing for the first multiblade fan through the opening provided on the cover, and the sucked air is accelerated in the scroll by the first multiblade fan and is discharged through the discharge port of the first casing. A part of this discharged air is used as air supplied to the other fan (the second multiblade fan). In particular, the air is separated by the two-layer scroll structure formed in the first casing, and for example, the radially outer-side air among the separated air flows is sent into the cover and supplied to the air intake port of the other fan (the second multiblade fan). By this supplied air, even if an air intake route for the second multiblade fan is not formed particularly, a lack of air intake of the second multiblade fan may be avoided. As a result, it becomes possible to balance the amounts of air for both fans, and balanced air sending for the double-axis type centrifugal blower can be achieved.

Further, by providing a motor cooling air guide in the air supplying route to the second multiblade fan, the cooling air may be efficiently supplied into the motor without using many parts for introducing cooling air.

Thus, in the centrifugal blower according to the present invention, the following advantages can be obtained.
(1) The air sending balance at the time of one-side air intake in the double-axis type centrifugal blower can be improved, and the temperature distribution in a heat exchanger, which is an object of the air sending, can be stabilized at a desirable temperature distribution.
(2) The one-side air intake structure can be achieved without any problem, and the design freedom for mounting the blower in a cabin can be remarkably increased. As a result, the freedom of the inside of a vehicle, in particular, a work vehicle, can be increased, and the comfortability in the cabin can be greatly increased.
(3) Because the cover containing the fan unit interrupts the noise of the blower, reduction of the noise may be achieved.
(4) Because it is not necessary to particularly ensure an air intake route for the second multiblade fan which is disposed at a position opposite to the side provided with an opening of the cover, the size of the entire blower may be made small.
(5) Since a cover is provided at least for a motor rotational portion even in a conventional structure, if this cover is formed as the cover according to the present invention, it is possible to achieve the structure according to the present invention substantially without increasing the number of parts. Further, because it is possible to form at least a part of the scroll of the first casing by the cover containing the entire fan unit, also from this point of view, the structure according to the present invention may be achieved without increasing the number of parts, as compared with a conventional structure.
(6) By providing the motor cooling air guide, it becomes possible to effectively cool the motor without providing an exclusive pipe and seal mechanism thereof for introducing the cooling air, and the number of parts for cooling the motor can also be decreased.
(7) Further, with respect to motor cooling, it is not necessary to consider the invasion of water from an evaporator and the like, and the maintenance workability may be improved.
(8) Furthermore, by adjusting the length and the like of the motor cooling air guide, the amount of air supplied to the second multiblade fan and the amount of air used for motor cooling may be distributed easily and appropriately.

Further features and advantages of the present invention will be understood from the following detailed description of the preferred embodiments of the present invention with reference to the accompanying figures, of which:
Fig. 1 is a schematic vertical sectional view of a centrifugal blower according to a first embodiment of the present invention.
Fig. 2 is an enlarged vertical sectional view of the centrifugal blower depicted in Fig. 1, as viewed along II-II line of Fig. 1.
Fig. 3 is a cross-sectional view of the centrifugal blower depicted in Fig. 2, as viewed along III-III line of Fig. 2.
Fig. 4A is an elevational view of an evaporator used in a test for determining the performance of the centrifugal blower depicted in Fig. 1, and Fig. 4B is a side view of the evaporator.
Fig. 5 is a graph showing the distribution of surface temperatures of the evaporator in a performance determination test applying a conventional blower structure.
Fig. 6 is a graph showing the distribution of surface temperatures of the evaporator in a performance determination test applying the blower structure according to the present invention.
Fig. 7 is a schematic vertical sectional view of a centrifugal blower according to a second embodiment of the present invention.
Fig. 8 is a graph showing measured temperatures of various measurement portions in a case where a motor cooling air guide is not provided in the blower depicted in Fig. 7.
Fig. 9 is a graph showing measured temperatures of various measurement portions in a case where a motor cooling air guide is provided in the blower depicted in Fig. 7.
Fig. 10 is a graph showing elevated temperatures of various measurement portions in the motor which are calculated by subtracting the outside air temperature from the measured temperatures shown in Fig. 8.
Fig. 11 is a graph showing elevated temperatures of various measurement portions in the motor which are calculated by subtracting the outside air temperature from the measured temperatures shown in Fig. 9.

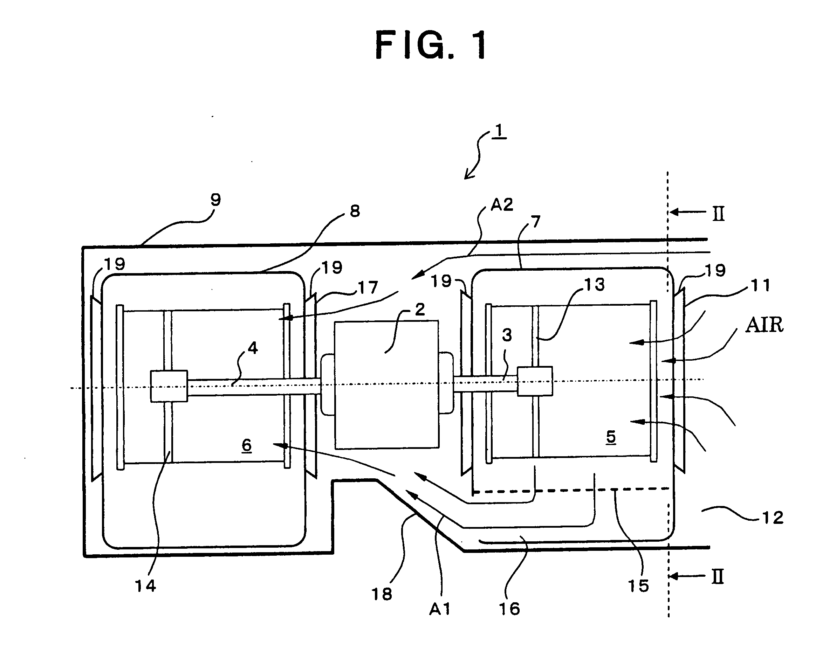

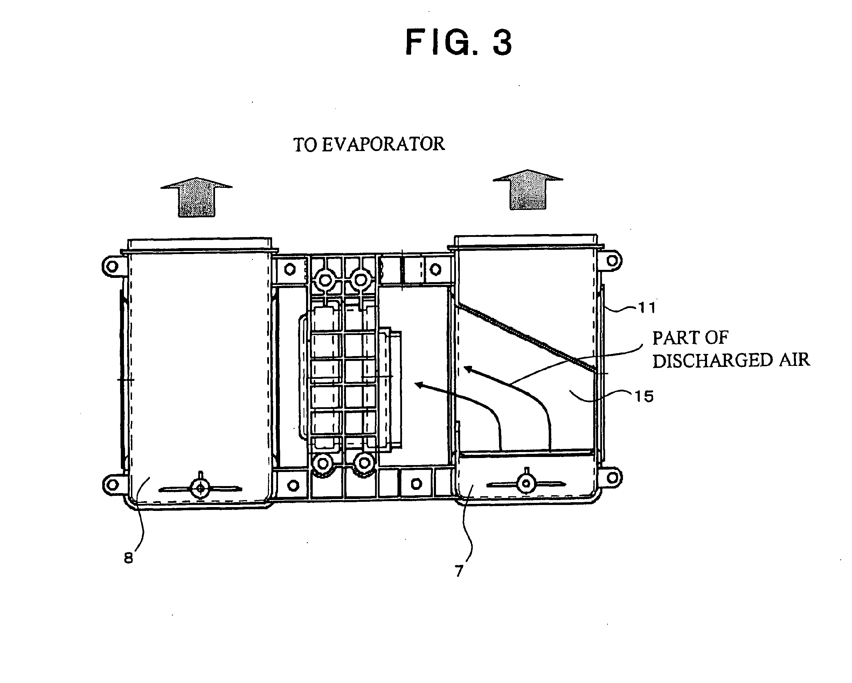

Figs. 1 to 3 depict a centrifugal blower according to a first embodiment of the present invention. In this embodiment, a centrifugal blower 1 is constructed as a blower used in an air conditioning system for vehicles, particularly, for work vehicles. For example, centrifugal blower 1 is used as a blower mounted, for example, at a position of a space between an operator seat and a floor in a cabin of a work vehicle for a thin-type air conditioning unit, and is used for sending air to a heat exchanger, for example, an evaporator of refrigerant.

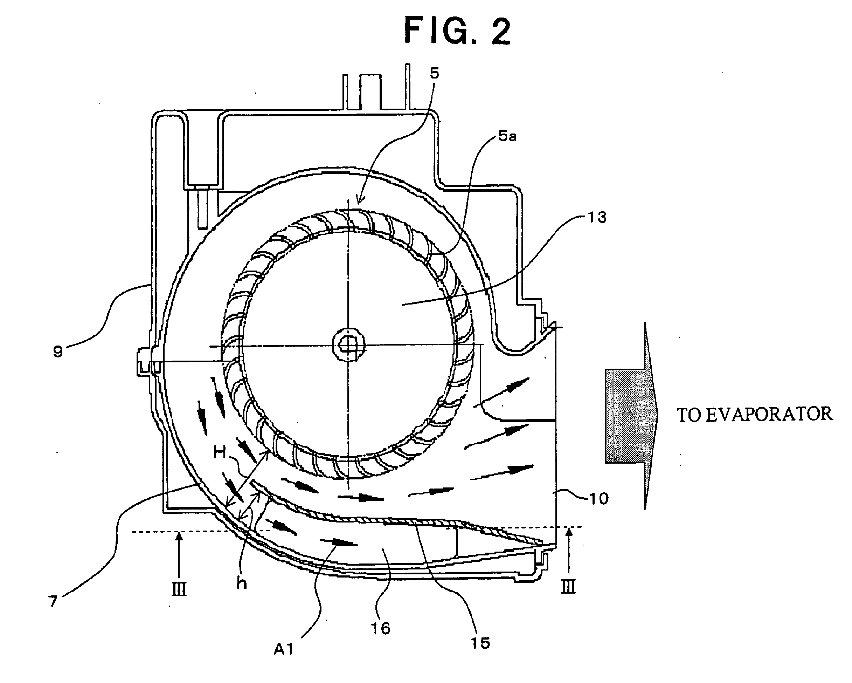

As depicted in Fig. 1, centrifugal blower 1 has a double-axis type motor 2, first multiblade fan 5 and second multiblade fan 6 connected, respectively, to rotary shafts 3 and 4 of double-axis type motor 2. First and second multiblade fans 5 and 6 are contained in first and second casings 7 and 8, respectively, and the interior of each of casings 7 and 8 is formed as a scroll structure. The whole of motor 2, first and second multiblade fans 5 and 6 and first and second casings 7 and 8 are covered with a blower cover 9. This cover 9 has an opening 12 only at a position corresponding to a position of an air intake port 11 of first casing 7 as an air intake opening except at positions corresponding to positions of air discharge ports of both of first and second casings 7 and 8. As to the air discharge ports, an air discharge port 10 of first casing 7 for first multiblade fan 5 is depicted in Fig. 2.

In respective multiblade fans 5 and 6, as depicted in Fig. 2 with respect to the side of first multiblade fan 5 which is an air intake side fan, multiblade fan portion 5a is formed by arranging curved blades in the circumferential direction, and by rotating multiblade fan portion 5a, air sucked into the inside is sent along the scroll shape of first casing 7, and discharged from air discharge port 10. Multiblade fan portion 5a and motor rotary shaft 3 are connected to each other by a main plate 13, thereby transmitting the driving force of motor 2 from rotary shaft 3 to multiblade fan portion 5a through main plate 13. Although second multiblade fan 6, which is a non-air intake side fan, has a similar motor driving force transmitting structure, in second multiblade fan 6, as depicted in Fig. 1, a main plate 14 connected to motor rotary shaft 4 is disposed at a position in an outer half area in the axial direction of second multiblade fan 6.

A partition 15 is provided at a position of air discharge port 10 in the scroll of first casing 7 for first multiblade fan 5, and by this partition 15, the scroll-structure interior of first casing 7 is formed as a two-layer scroll structure (a double scroll structure). Among scroll portions of this two-layer scroll structure, a radially outer-side scroll portion 16 has a flow path formed so as to discharge a part of discharged air (outer side air) separated by the two-layer scroll structure into cover 9 without guiding the air to air discharge port 10, as depicted in Figs. 1 to 3. Especially, in this embodiment, this part of discharged air is discharged toward the side of an air intake port 17 of second casing 8 for second multiblade fan 6. Further, a guide 18 for guiding this part of discharged air to air intake port 17 of second casing 8 for second multiblade fan 6 is provided in cover 9. Therefore, discharged air Al of first multiblade fan 5 guided through outer-side scroll portion 16 formed by partition 15 becomes at least a part of air supplied to second multiblade fan 6, as shown in Figs. 1 and 2. Of course, second multiblade fan 6 can suck other air such as air A2 bypassing first multiblade fan 5.

As depicted in Fig. 2, the amount of the above-described air supplied to second multiblade fan 6 through outer-side scroll portion 16 can be appropriately controlled by adjusting the height h of the flow path of the outer-side scroll portion 16 formed by partition 15. In particular, by appropriately adjusting the ratio of the height h at the entrance portion of outer-side scroll portion 16 relative to the height H of the flow path at this portion of the entire scroll portion, the amount of air supplied to second multiblade fan 6 among the total amount of air discharged by first multiblade fan 6 can be controlled, and therefore, the air sending balance of the entire centrifugal blower 1 can be improved more preferably.

Further, in this embodiment, in order to achieve a more smooth air intake, a bellmouth 19 having a diameter increasing toward an outside of each of first and second casings 7 and 8 is provided to each of air intake ports 11 and 17 of first and second casings 7 and 8.

In centrifugal blower 1 thus constructed, since opening 12 is provided only at a position of one side of cover 9, a one-side air intake is intentionally formed. The air sucked from air intake port 11 of first multiblade fan 5 disposed in this side is accelerated in the scroll of first casing 7 for the first multiblade fan 5, and discharged from air discharge port 10. Because the interior of the scroll of first casing 7 is formed as a two-layer scroll structure, a part of the air flowing in the scroll, which is separated by the two-layer scroll structure, is supplied to air intake port 17 of second casing 8 for second multiblade fan 6. In second multiblade fan 6, lack of air intake is prevented by this supplied air even if a particular air intake route is not ensured, it becomes possible to make the amount of air sending by first multiblade fan 5 and the amount of air sending by second multiblade fan 6 to be about equal, and therefore, the air sending balance between first and second multiblade fans 5 and 6 may be improved. Namely, it becomes possible to intentionally form a one-side air intake and to ensure a good air sending balance between first and second multiblade fans 5 and 6.

The air discharged from centrifugal blower 1 is used, for example, as air sent to an evaporator for refrigerant in an air conditioning system, as aforementioned. Therefore, air sending balance of the discharged air from centrifugal blower 1 can be evaluated by measurement of surface temperature on the evaporator.

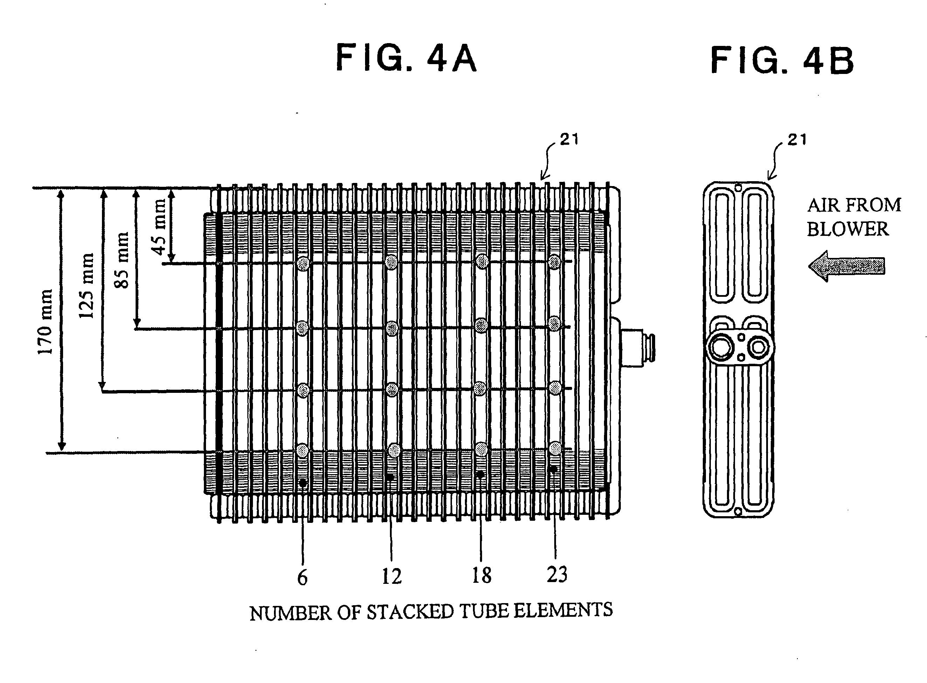

The air sending balance of the discharged air from centrifugal blower 1 was evaluated by using an evaporator 21 depicted in Figs. 4A and 4b and measuring the surface temperatures at various measurement positions of the evaporator 21. Fig. 4A is an elevational view of evaporator 21, and Fig. 4B is a side view thereof, and the air discharged from centrifugal blower 1 was supplied toward one surface of evaporator 21. In Fig. 4A, various measurement positions are shown, and the measurement positions were set by employing the number of stacked tube elements from the left side of evaporator 21 depicted in Fig. 4A (number: 6, 12. 18 and 23) and dimensions from the upper end of evaporator 21 depicted in Fig. 4A (dimension: 45 mm, 85 mm, 125 mm and 170 mm).

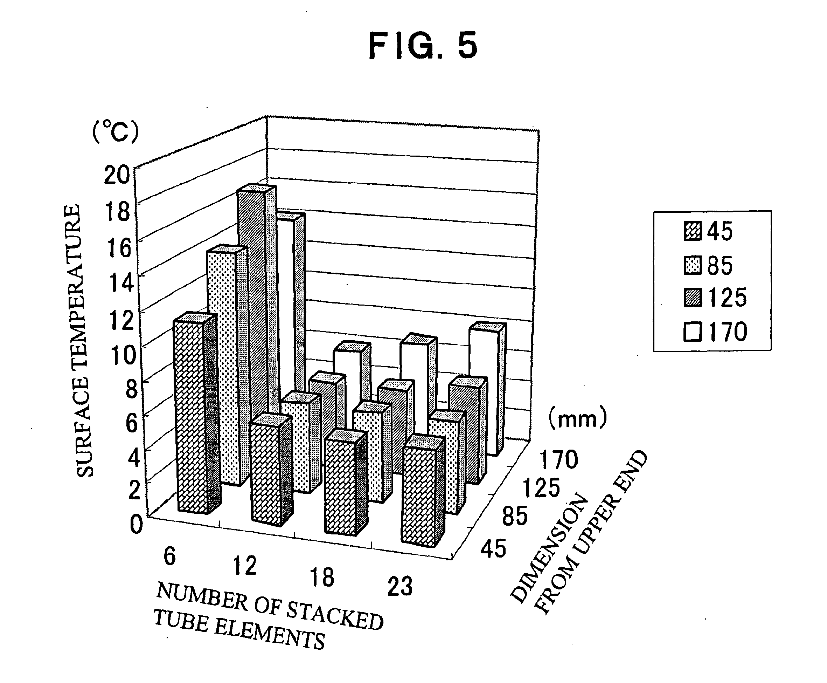

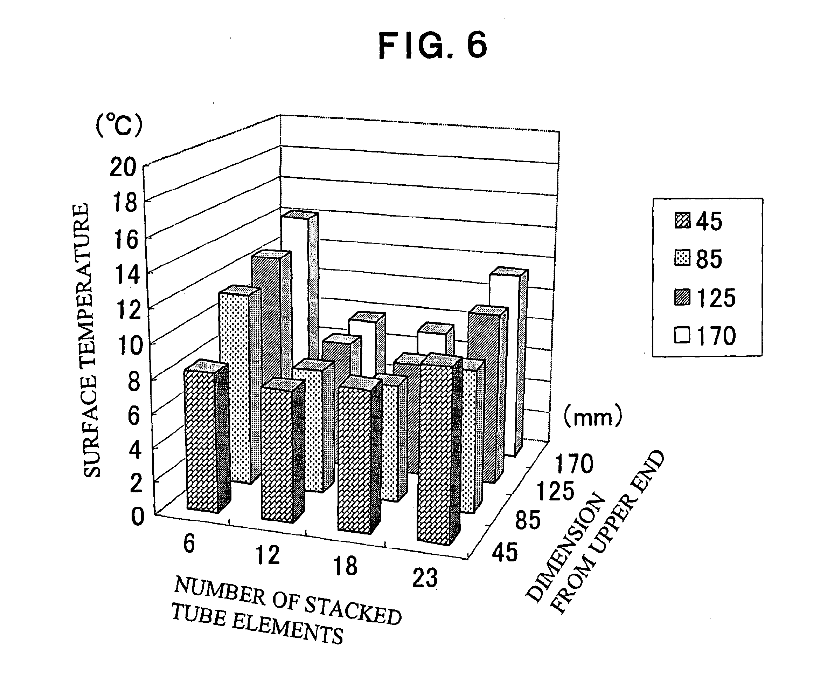

Fig. 5 shows the result of the above-described evaluation as to the measurement of the surface temperatures of evaporator 21 in a case where the structure specified in Figs. 1 to 3 was not provided, in particular, a structure wherein an opening was provided only at one side of cover 9 and a structure wherein a part of air discharged from first multiblade fan 5 was supplied toward air intake port 17 of second casing 8 for second multiblade fan 6 were not provided. Fig. 6 shows the result of the above-described evaluation as to the measurement of the surface temperatures of evaporator 21 in a case where the structure according to the present invention was applied. From the comparison between the results shown in Figs. 5 and 6, it is understood that the air sending balance was explicitly improved by application of the present invention.

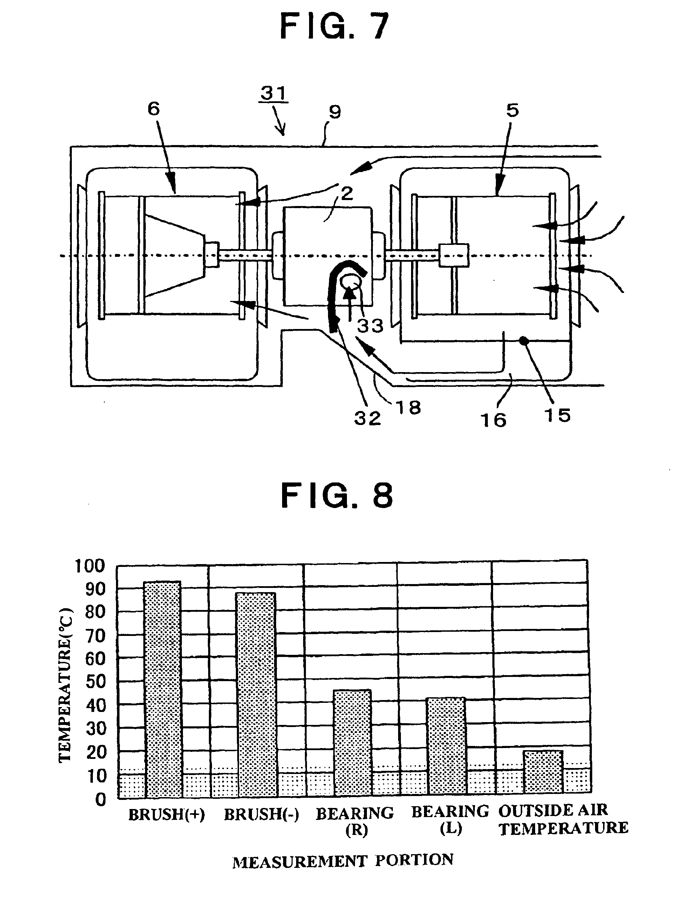

Fig. 7 depicts a centrifugal blower 31 according to a second embodiment of the present invention. In this embodiment, as compared with the above-described first embodiment, a part of the air, which is separated by the two-layer scroll structure formed by partition 15 as a part of air discharged from first multiblade fan 5 and led toward second multiblade fan 6, is guided motor 2 as motor cooling air by a motor cooling air guide 32 provided on the way of the air path from first multiblade fan 5 to second multiblade fan 6. In this embodiment, although motor cooling air guide 32 is provided integrally with blower cover 9 in the cover 9, it may be provided integrally with a motor cover which covers motor 2 itself. Further, it is preferred that motor cooling air guide 32 can be adjusted in length, and the distribution between the amount of air supplied to second multiblade fan 6 and the amount of air used as motor cooling air can be easily controlled. In this embodiment, the air guided by motor cooling air guide 32 is introduced into motor 2 through a cooling air intake port 33 provided on motor 2, and the introduced air cools various portions in the motor 2 (for example, brush portions and bearing portions).

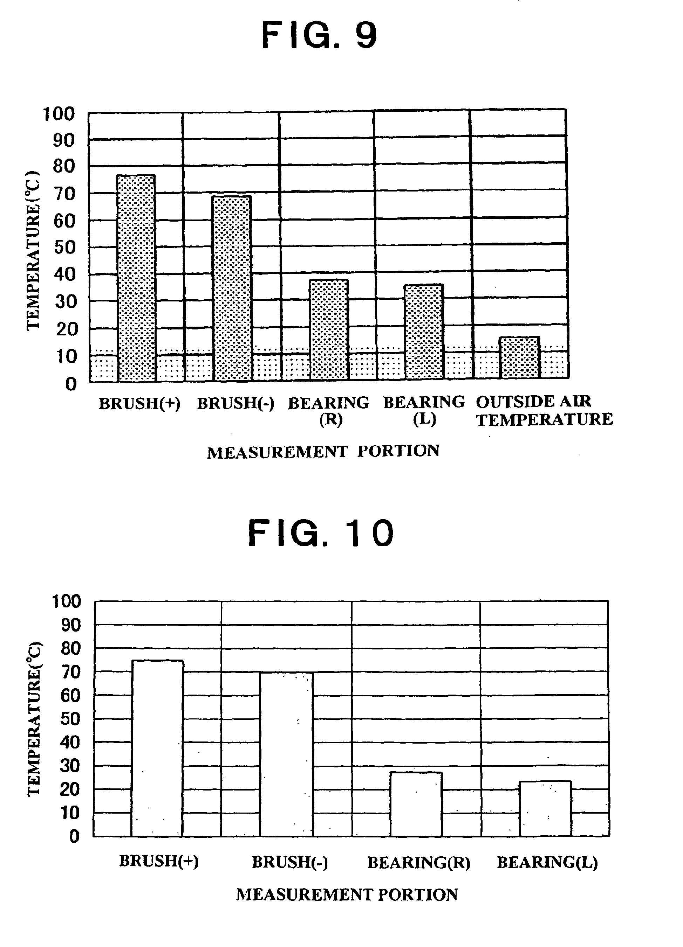

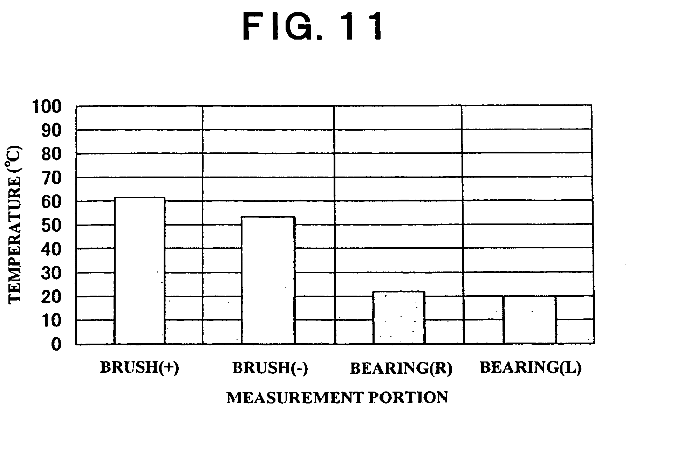

Figs. 8 and 9 show the results of temperature measurement on brush portions (plus (+) side and minus (-) side brush portions) and bearing portions (right (R) side and left (L) side bearing portions) in motor 2 in a case where motor cooling air guide 32 was not provided (Fig. 8) and in a case where motor cooling air guide 32 was provided (Fig. 9). Since the outside air temperatures at the times of the measurement shown in Fig. 8 and the measurement shown in Fig. 9 were slightly different from each other, only the amounts of temperature elevation calculated by subtracting the respective outside air temperatures from the brush or bearing portion temperature shown in Figs. 8 and 9 are shown in Figs. 10 and 11. Fig. 10 shows the case where motor cooling air guide 32 was not provided, and Fig. 11 shows the case where motor cooling air guide 32 was provided.

From Figs. 8 to 11, it is understood that various portions in motor 2 (motor brush portions and motor bearing portions) are effectively cooled by providing motor cooling air guide 32. In this motor cooling, because a part of the air sent from first multiblade fan 5 to second multiblade fan 6 is utilized, it is not necessary to provide parts (pipe and seal mechanism) exclusive for cooling as in the conventional structure, and the number of parts can be decreased. Further, it is not necessary to consider the invasion of water from an evaporator and the like. Moreover, because motor cooling air guide 32 is integrated with blower cover 9 (or a motor cover), the maintenance property may be good.

Such a centrifugal blower according to the present invention is useful for a case where only one side space can be ensured for air intake, for example, as a blower for an air conditioning system for work vehicles, which is disposed in a cabin of a work vehicle.

## Claims

1. A centrifugal blower (1) comprising first (5) and second (6) multiblade fans each connected to each rotary shaft (3,4) of a double-axis type motor (2), first (7) and second (8) casings each containing each of said first (5) and second (6) multiblade fans, an interior of each of said first (7) and second (8) casings being formed as a scroll structure, and a cover (9) for covering both of said first (7) and second (8) casings, **characterized in that** said cover (9) has an opening (12) only at a position corresponding to a position of an air intake port (11) of said first casing (7) except at positions corresponding to positions of air discharge ports (10) of both of said first (7) and second (8) casings.

2. The centrifugal blower according to claim 1, wherein a portion of said scroll-structure interior of said first casing (7) positioned at an air discharge port (10) side of said first casing (7) is formed as a two-layer scroll structure (15), and a part of discharged air separated by said two-layer scroll structure (15) is introduced into said cover.

3. The centrifugal blower according to claim 2, wherein a guide (18) for guiding said part of discharged air separated by said two-layer scroll structure to an air intake port (17) of said second casing (8) is provided in said cover (9).

4. The centrifugal blower according to any preceding claim, wherein a main plate (14) of said second multiblade fan (6) connecting a multiblade fan portion of said second multiblade fan (6) to said rotary shaft (4) is disposed at a position in an outer half area in an axial direction of said second multiblade fan (6).

5. The centrifugal blower according to any preceding claim, wherein a bellmouth (19) having a diameter increasing toward an outside of each casing (7,8) is provided to an air intake port (11,17) of each casing (7,8).

6. The centrifugal blower according to any of claims 2 to 5, wherein a motor cooling air guide (32) for guiding said part of discharged air separated by said two-layer scroll structure (15) to said motor (2) as motor cooling air is provided in said cover (9).

7. The centrifugal blower according to claim 6, wherein said motor cooling air guide (32) is provided integrally with said cover (9).

8. The centrifugal blower according to claim 6, wherein said motor cooling air guide (32) is provided integrally with a motor cover.

## Patentansprüche

1. Ein Radial-/Zentrifugalgebläse (1), aufweisend
einen ersten (5) und zweiten (6) Mehrblattventilator, die jeweils mit jeder Drehwelle (3, 4) eines Doppelachsenmotors (2) verbunden sind,
ein erstes (7) und ein zweites (8) Gehäuse, die jeweils jeden des ersten (5) und des zweiten (6) Mehrblattventilators enthalten, wobei ein Inneres jeweils des ersten (7) und des zweiten (8) Gehäuses als Schneckenstruktur ausgebildet ist, und
eine Abdeckung (9) zum Abdecken sowohl des ersten (7) als auch des zweiten (8) Gehäuses,
**dadurch gekennzeichnet, daß** die Abdeckung (9) eine Öffnung (12) nur an einer Position aufweist, die einer Position einer Luftansaugöffnung (11) des ersten Gehäuses (7) entspricht, mit Ausnahme von Positionen, die Positionen einer Luftausstoßöffnung (10) von sowohl dem ersten (7) als auch dem zweiten (8) Gehäuse entsprechen.

2. Das Radial-/Zentrifugalgebläse gemäß Anspruch 1, wobei ein Abschnitt des Schneckenstrukturinneren des ersten Gehäuses (7), das an einer Seite der Luftausstoßöffnung (10) des ersten Gehäuses (7) angeordnet ist, als eine Zweischichtschneckenstruktur (15) ausgebildet ist, und ein Teil der ausgestoßenen Luft, der durch die Zweischichtschneckenstruktur (15) abgesondert wurde, in die Abdeckung eingeführt wird.

3. Das Radial-/Zentrifugalgebläse gemäß Anspruch 2, wobei eine Führung (18) zum Führen des Teils der ausgestoßenen Luft, der durch die Zweischichtschneckenstruktur abgesondert wurde, zu einer Luftansaugöffnung (17) des zweiten Gehäuses (8) in der Abdeckung (9) vorgesehen ist.

4. Das Radial-/Zentrifugalgebläse gemäß einem der vorhergehenden Ansprüche, wobei eine Hauptplatte (14) des zweiten Mehrblattventilators (6), die einen Mehrblattventilatorabschnitt des zweiten Mehrblattventilators (6) mit der Drehwelle (4) verbindet, an einer Position in einem Bereich einer äußeren Hälfte in einer axialen Richtung des zweiten Mehrblattventilators (6) angeordnet ist.

5. Das Radial-/Zentrifugalgebläse gemäß einem der vorhergehenden Ansprüche, wobei eine trompetenförmige Öffnung (19), die einen Durchmesser aufweist, der in Richtung einer Außenseite jedes Gehäuses (7, 8) zunimmt, an einer Luftansaugöffnung (11, 17) jedes Gehäuses (7, 8) vorgesehen ist.

6. Das Radial-/Zentrifugalgebläse gemäß einem der Ansprüche 2 bis 5, wobei eine Motorkühlluftführung (32) zum Führen des Teils der ausgestoßenen Luft, der durch die Zweischichtschneckenstruktur (15) abgesondert wurde, als Motorkühlluft zu dem Motor (2) in der Abdeckung (9) vorgesehen ist.

7. Das Radial-/Zentrifugalgebläse gemäß Anspruch 6, wobei die Motorkühlluftführung (32) einstückig mit der Abdeckung (9) vorgesehen ist.

8. Das Radial-/Zentrifugalgebläse gemäß Anspruch 6, wobei die Motorkühlluftführung (32) einstückig mit einer Motorabdeckung vorgesehen ist.

## Revendications

1. Soufflante centrifuge (1) comprenant un premier ventilateur multipale (5) et un second ventilateur multipale (6) reliés chacun à l'un des deux arbres rotatifs (3, 4) d'un moteur (2) de type à axe double, un premier carter (7) et un second carter (8) contenant chacun les premier (5) et second (6) ventilateurs multipales, l'intérieur de chacun des premier (7) et second (8) carters étant réalisé sous la forme d'une structure en spirale, et un capot (9) destiné à recouvrir à la fois le premier carter (7) et le second carter (8),
**caractérisée en ce que**
le capot (9) comporte une ouverture (12) uniquement à un endroit correspondant à la position d'un orifice d'entrée d'air (11) du premier carter (7), sauf aux endroits correspondant aux positions des orifices de décharge d'air (10) à la fois du premier carter (7) et du second carter (8).

2. Soufflante centrifuge selon la revendication 1,
dans laquelle
une partie de l'intérieur de la structure en spirale du premier carter (7), positionnée du côté de l'orifice de sortie d'air (10) du premier carter (7), est réalisée sous la forme d'une structure en spirale à deux couches (15), et une partie de l'air sortant, séparée par la structure en spirale à deux couches (15), est introduite dans le capot.

3. Soufflante centrifuge selon la revendication 2,
dans laquelle
le capot (9) loge un guide (18) destiné à guider la partie de l'air sortant qui est séparée par la structure en spirale à deux couches vers l'orifice d'entrée d'air (17) du second carter (8).

4. Soufflante centrifuge selon l'une quelconque des revendications précédentes,
dans laquelle
une plaque principale (14) du second ventilateur multipale (6), reliant une partie de ventilateur multipale du second ventilateur multipale (6) à l'arbre rotatif (4), est disposée dans une position située dans la zone de moitié extérieure, dans la direction axiale, du second ventilateur multipale (6).

5. Soufflante centrifuge selon l'une quelconque des revendications précédentes,
dans laquelle
une embouchure conique (19) présentant un diamètre croissant vers l'extérieur de chaque carter (7, 8), est prévue à l'endroit de l'orifice d'entrée d'air (11, 17) de chaque carter (7, 8).

6. Soufflante centrifuge selon l'une quelconque des revendications 2 à 5,
dans laquelle
le capot (9) loge un guide d'air de refroidissement (32) du moteur, destiné à guider la partie de l'air sortie, qui est séparée par la structure en spirale à deux couches (15), vers le moteur (2), comme air de refroidissement de ce moteur (2).

7. Soufflante centrifuge selon la revendication 6,
dans laquelle
le guide d'air de refroidissement (32) du moteur est prévu d'un seul tenant avec le capot (9).

8. Soufflante centrifuge selon la revendication 6,
dans laquelle
le guide d'air de refroidissement (32) du moteur est prévu d'une seule pièce avec un capot du moteur.
